# EUROPEAN PATENT SPECIFICATION

(11) **EP 0 974 509 B1**
(45) Date of publication and mention of the grant of the patent: **20.08.2003**
(21) Application number: 99113992.4
(22) Date of filing: 19.07.1999
(51) Int. Cl.: B62D 25/08, B62D 25/20

(54) **A method for the manufacture of a motor vehicle chassis, and a chassis manufactured using this method**
Herstellungsverfahren eines Kraftfahrzeugchassis, und Chassis dadurch hergestellt
Procédé de fabrication d'un chassis de véhicule automobile et chassis fabriqué par ce procédé

(30) Priority: 21.07.1998 IT TO980636
(43) Date of publication of application: 26.01.2000
(73) Proprietor: FIAT AUTO S.p.A., 10135 Torino (IT)
(72) Inventor: Lugaro, Silvio, 10135 Torino (IT); Gandiglio, Romolo, 10020 Cambiano (Torino) (IT)
(74) Representative: Quinterno, Giuseppe

(56) References cited:
- EP-A- 0 297 057
- EP-A- 0 823 366
- DE-A- 19 633 908
- DE-A- 19 708 404

## Description

The present invention concerns a method for the manufacture of a chassis for a motor vehicle of the kind defined in the preamble of Claim 1.

DE-A-197 08 404 discloses a method of that kind wherein rear nodal structures comprising longitudinal beams are attached to ends of first longitudinal beams using attachment means provided on said longitudinal beams.

DE-A-196 33 908 discloses a method wherein longitudinal beams are attached to a cross-member, distant from the ends of the cross-member.

The object of the present invention is to enable the systematic manufacture of a motor vehicle chassis to be achieved easily using only a limited number of modified structural elements and a highly automated method that enables a motor vehicle chassis having different characteristics, for example, different lengths and/or different body widths to be produced.

This and other objects are achieved with a method the salient characteristics of which are defined in the accompanying claim 1.

Further characteristics and advantages of the invention will become clear from the following detailed description, given purely by way of non-limitative example, with reference to the accompanying drawings, in which:
Figure 1 is an exploded perspective view which shows two front, lateral nodal structures and an associated cross beam, for producing a first rigid subframe according to the method of the invention;
Figure 2 is a perspective view showing the components of Figure 1 in their assembled condition;
Figure 3 is a partial perspective view in the direction of the arrow III of Figure 2;
Figure 4 is a sectional view taken on the line IV-IV of Figure 3;
Figure 5 is a perspective view showing the first subframe of Figure 2 to which two longitudinal members are connected;
Figure 6 is a sectional view taken on the line VI-VI of Figure 5;
Figure 7 is an exploded perspective view showing the structure of Figure 5 together with two rear lateral nodal structures and two associated cross beams, before their interconnection;
Figure 8 is a perspective view showing the components of Figure 7 in their assembled condition;
Figures 9 to 11 are sectional views taken on the lines IX-IX, X-X and XI-XI respectively, of Figure 8;
Figure 12 is a perspective view showing the structure of Figure 8 and associated panels, before their interconnection;
Figure 13 shows the components of Figure 12 in their assembled condition;
Figure 14 is a perspective view in the direction of the arrow XIV of Figure 13;
Figure 15 is a perspective view of a tunnel element;
Figure 16 is a perspective view showing the structure of Figure 13 and the tunnel element of Figure 15 in their assembled condition;
Figures 17 and 18 show further shaped panels intended to be welded to the structure shown in Figure 16;
Figure 19 is a partially exploded perspective view showing the structure of Figure 16 and the panels of Figures 17 and 18 in their assembled condition, together with further panels and structural elements;
Figure 20 is a partially exploded perspective view showing the components of Figure 19 in their assembled condition and two further lateral longitudinal elements, before their interconnection to this structure; and
Figure 21 shows a chassis structure obtained from the assembly of the components shown in Figure 20.

For the manufacture of a motor vehicle chassis using the method according to the invention, two front lateral nodal structures, respectively left and right, symmetrical to each other and generally indicated 1a and 1b, are initially produced.

In the embodiment illustrated by way of example, each front nodal structure 1a, 1b, comprises a respective shaped element 2, in which a dome 3 is formed for fixing an associated front suspension, a front longitudinal beam 4, a shaped rear beam portion 5 and a lower support element 6 for attaching an arm of the suspension.

Preferably, the front longitudinal beams 4 are channel-shape metal elements formed, for example, by extrusion. The shaped element 2, the rear beam portion 5 and the lower support 6 are, however, preferably formed by pressing.

In each front nodal structure 1a, 1b, the longitudinal beam 4 has an end welded to a corresponding end of the rear beam portion 5, and these beams 4 and 5 are in turn welded to a side of the shaped element 2. The support element 6 is welded both to the shaped element 2 and the beams 4 and 5.

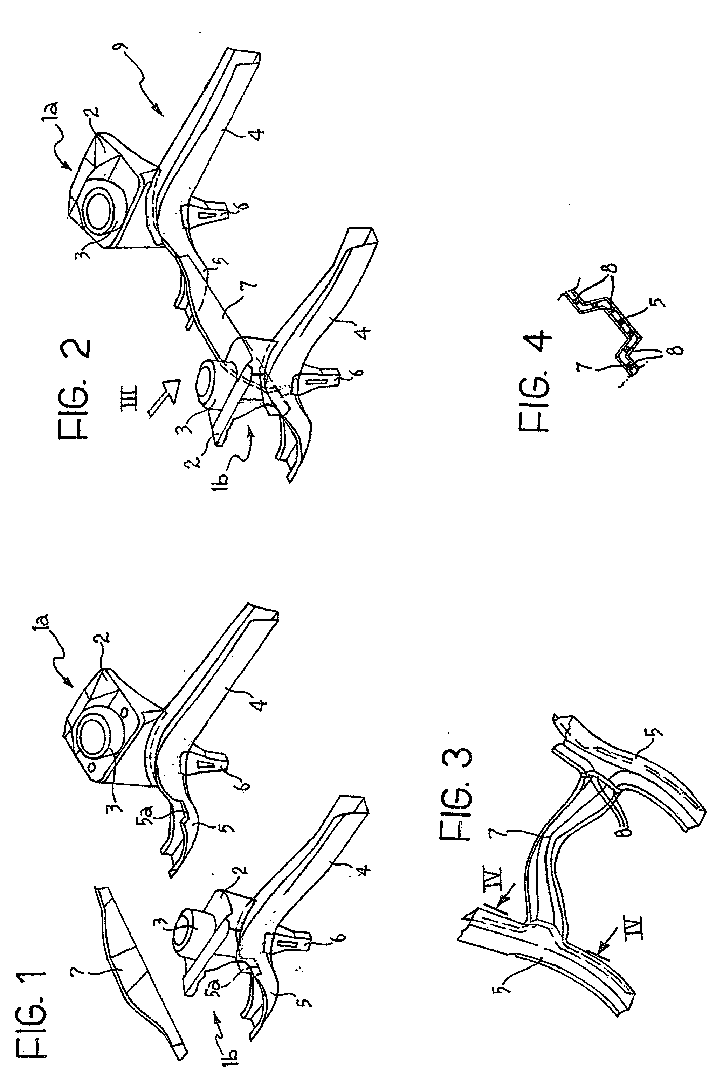

The front nodal structures 1a and 1b are interconnected by means of a first, substantially channel shape (Figures 3 and 4) cross beam 7. The ends of the cross beam 7 are juxtaposed at the margins or edges of notches or seats 5a in the beam portions 5 of the nodal structures 1a and 1b (Figure 1), and are welded there at a plurality of weld points 8 (Figures 3 and 4).

Welding the cross beam 7 to the front nodal structures 1a and 1b enables a first subframe, generally indicated 9 in Figure 2, to be formed, which subframe is structurally rigid and therefore geometrically stable.

The cross beam 7 can advantageously be formed from pressed sheet steel.

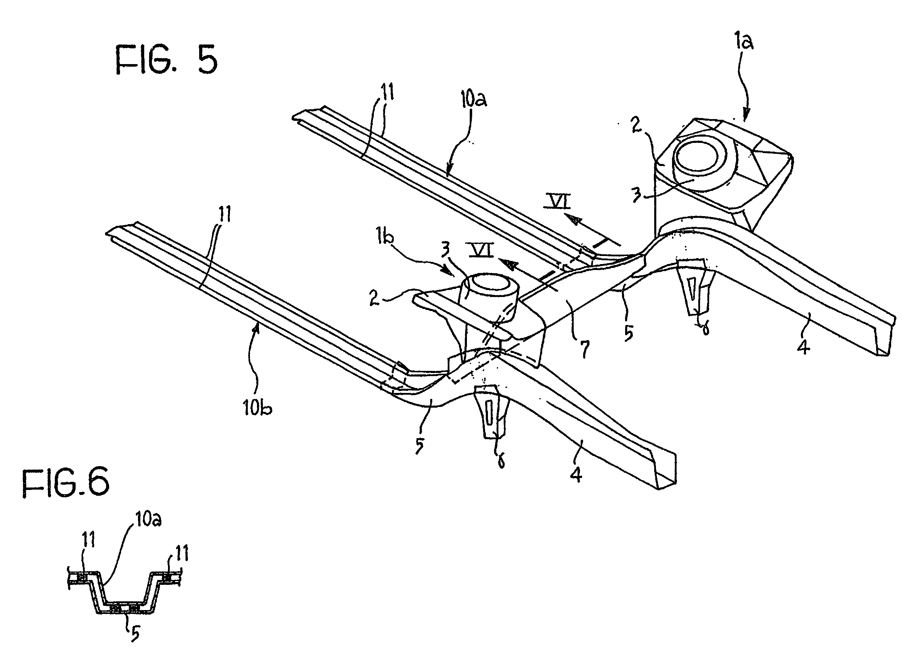

The construction of the chassis then continues with the welding of two longitudinal elements 10a and 10b, respectively left and right (Figure 5), to the distal ends of the rear beams 5 of the nodal structures 1a and 1b. The longitudinal elements 10a and 10b are substantially channel-shape, with respective folded upper edges or margins which extend essentially in a horizontal plane.

The longitudinal elements 11 can advantageously be formed as shaped metal elements, for example, as extruded elements.

The longitudinal elements 10a and 10b extend substantially coplanar and parallel to each other from opposite sides to the front longitudinal beams 4 connected to the nodal structures 1a and 1b.

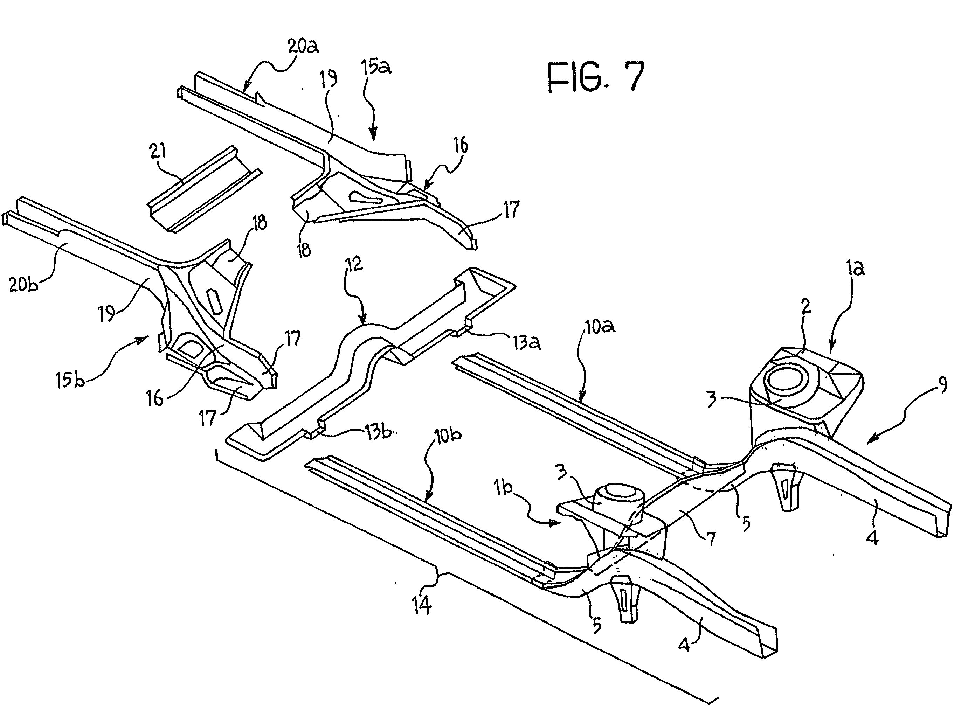

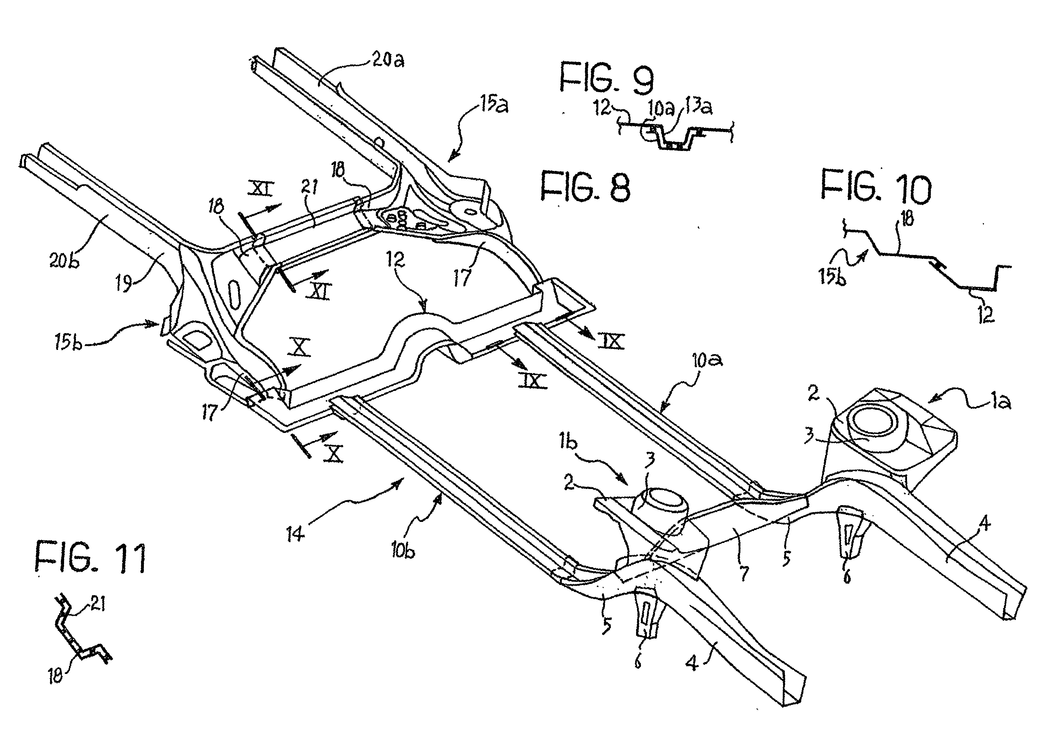

With reference to Figures 7 and 8, the construction of the chassis continues with the interconnection by welding of a second cross beam 12 to the ends of the longitudinal elements 10a and 10b opposite the aforesaid front nodal structures. In the embodiment illustrated, the front edge of the cross beam 12 has two hollow formations 13a and 13b, respectively left and right, juxtaposed and form coupled to the ends of the longitudinal elements 10a and 10b (see also Figures 8 and 9) and welded thereto at a plurality of points to form a second rigid and geometrically stable subframe of the assembly, generally indicated 14 in Figures 7 and 8.

The cross beam 12 can be formed from pressed sheet steel.

In Figure 7, the reference numerals 15a and 15b indicate two rear lateral nodal structures, respectively left and right, symmetrical to each other. These nodal structures comprise respective shaped bodies 16, formed from pressed sheet steel, with associated front projections 17, upper projections 18 and rear projections 19.

Respective rear longitudinal beams 20a, 20b are welded to the projections 19 of the nodal structures 15a and 15b, which beams project, essentially parallel to each other, from the opposite sides of the subframe 14.

The front ends 17 of the said rear nodal structures are juxtaposed and welded to the ends of the cross beam 12.

The ends of a further channel-shape cross beam 21 are juxtaposed and welded to the upper projections 18 of these nodal structures

The rear beams 20a, 20b, together with the cross beam 21, can advantageously be formed as shaped metal elements, for example, by extrusion.

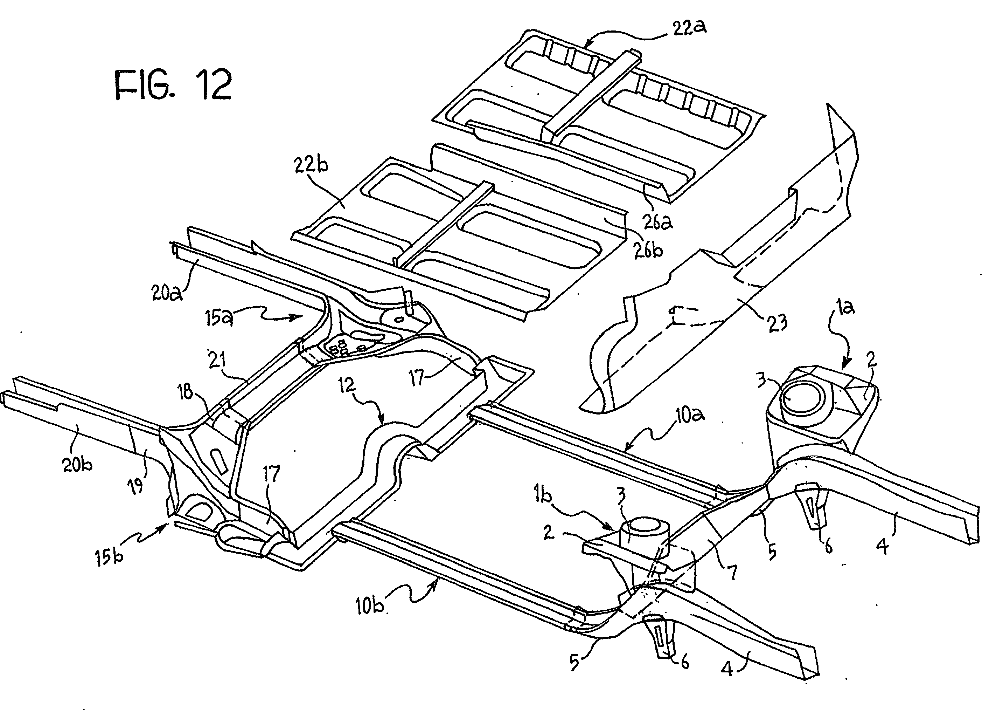

With reference to Figures 12 to 16, two essentially rectangular panels 22a, 22b, and a lower dashboard panel 23 are then fixed to the rigid structure formed in this way.

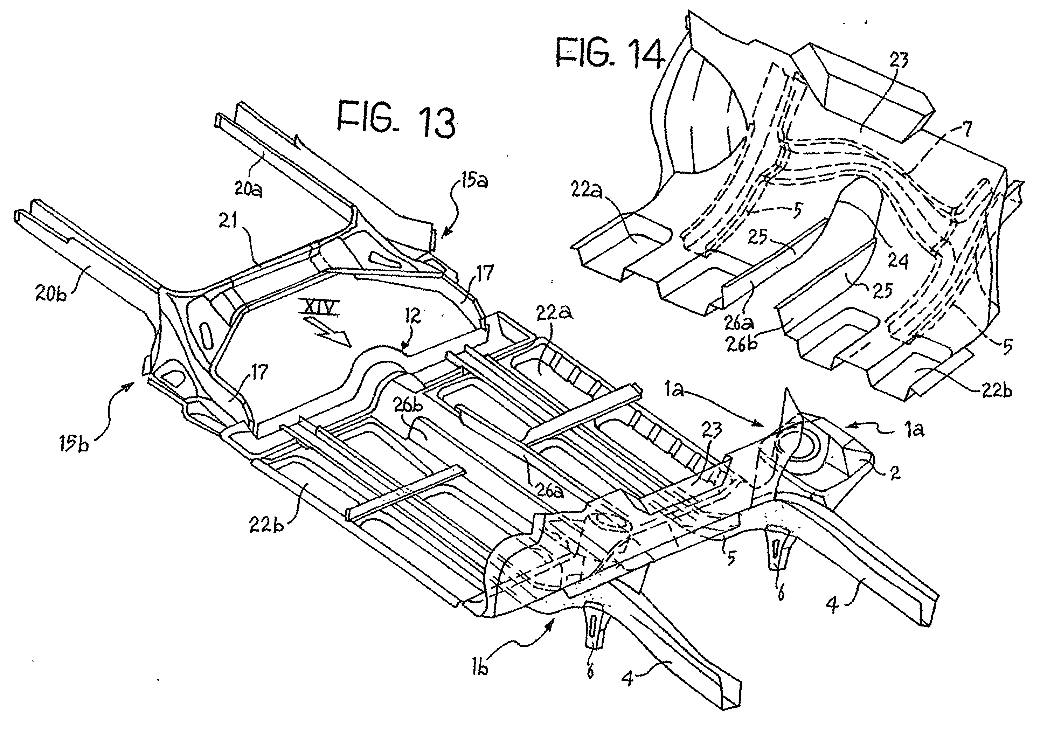

The lower dashboard panel 23 rests on and is welded to the rear beams 5 which extend from the front nodal structures 1a and 1b, as well as on the front cross beam 7. The panels or footplates 22a and 22b, intended generally to form the floor of the motor vehicle body, rest on and are welded to the longitudinal members 10a, 10b on the front margin of the cross beam 12, and on the rear margin of the lower dashboard panel 23. This latter has a slot 24 (Figure 14) which extends from its rear margin to its longitudinally intermediate zone. The panel 23 has two facing folded edges 25 which connect respective, correspondingly upwardly folded longitudinal flanges 26a and 26b, of the panels or footwell plates 22a and 22b.

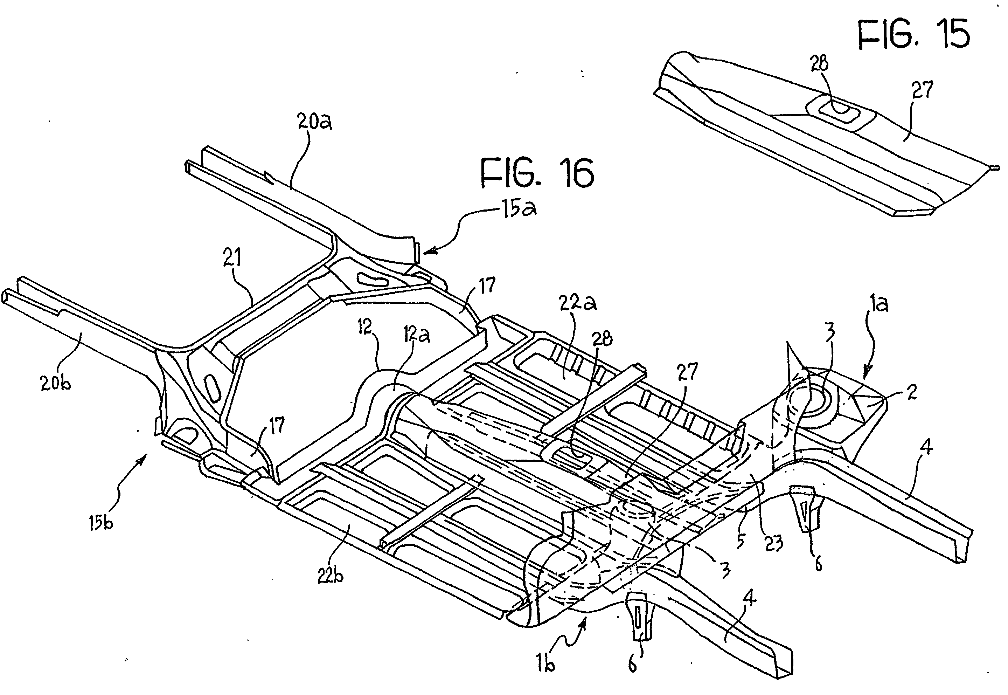

A tunnel element, indicated 27 in Figure 15, is then applied and welded to the structure thus formed. This tunnel element has an aperture 28 in its central zone intended to enable the gear stick to pass through in known way.

The tunnel element 27 is juxtaposed with the panels or footwell plates 22a and 22b, with its lateral skirts or flanges in contact with the upwardly folded edges 26a and 26b of the said panels or footwell plates. The rear arcuate edge of the tunnel element 27 is juxtaposed and welded to an arcuate intermediate portion 12a of the cross beam 12 (Figure 16).

The panels or footwell plates 22a, 22b, the panel 23 below the dashboard, and the tunnel element 27 are advantageously formed from pressed sheet steel.

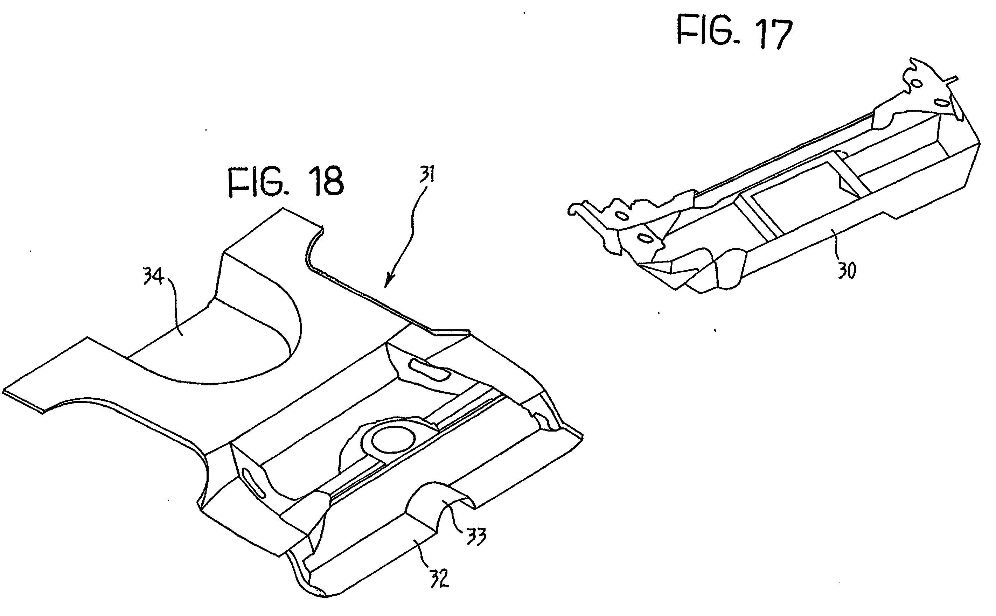

A dashboard reinforcement 30 (Figure 17) and a rear floor panel 31 (Figure 18) are then applied and welded to the structure of Figure 16.

The dashboard reinforcement 30 and the rear floor panel 31 are advantageously formed from pressed sheet steel.

In the embodiment illustrated by way of example, the rear floor panel 31 has a front flange or hip 32, with an arcuate central portion 33 for form-coupling with and welding to the cross beam 12.

The floor panel 31 further rests against and is welded to the rear nodal structures 15a and 15b, as well as to the cross beam 21 and the rear beams 20a and 20b.

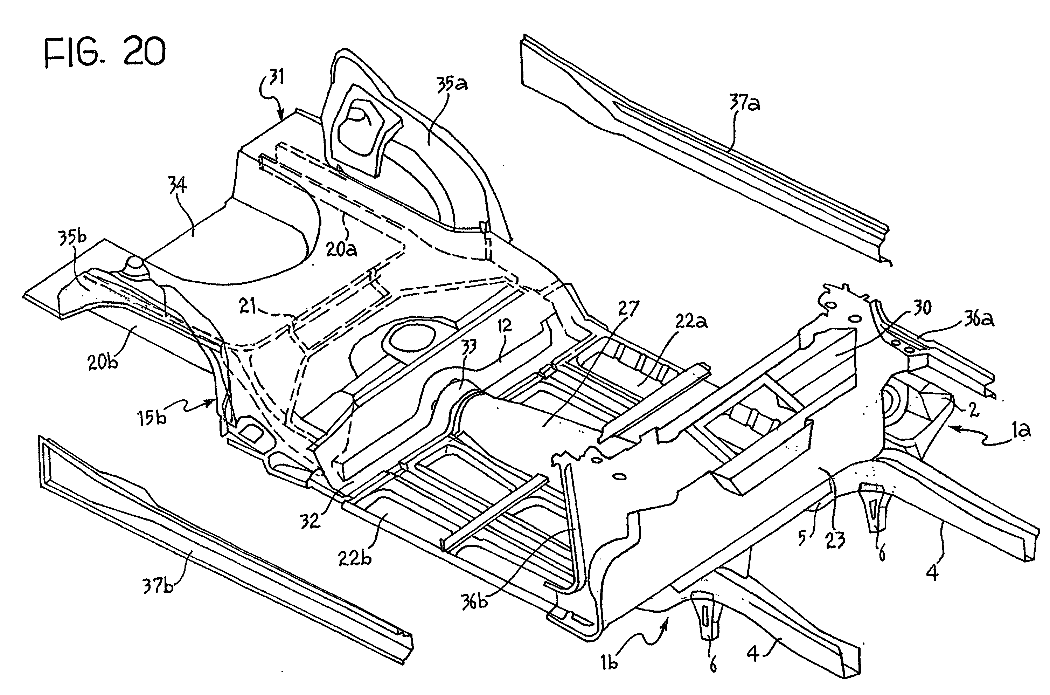

A hollow seat 34 (Figures 18 to 20) can be provided in the flooring panel 31 for housing a spare wheel.

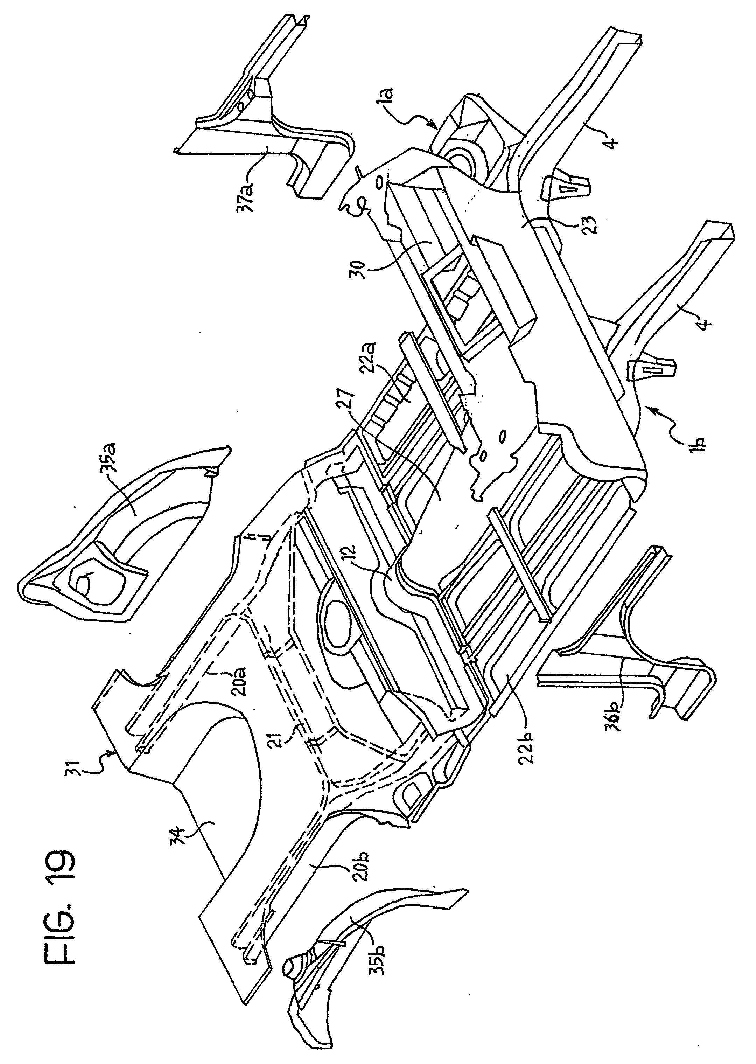

The construction of the chassis then proceeds with the application and welding of left and right rear wheel arch elements, indicated 35a and 35b respectively in Figures 19 to 21.

Two side plates 36a and 36b are then applied and welded to the front nodal structures 1a and 1b, as well as to the lateral edges or margins of the dashboard frame 30, the panel below the dashboard and the footwell plates 22a and 22b. The side plates 36a and 36b are advantageously formed from pressed sheet steel.

Two lateral longitudinal elements 37a and 37b are then applied and welded to the side edges of the footwell plates 22a and 22b. The front ends of the lateral longitudinal elements 37a, 37b are juxtaposed and welded to the rear ends of the corresponding side plates 36a, 36b. The rear ends of the longitudinal elements are, in turn, juxtaposed and welded to the side edges of the rear floor panel 31.

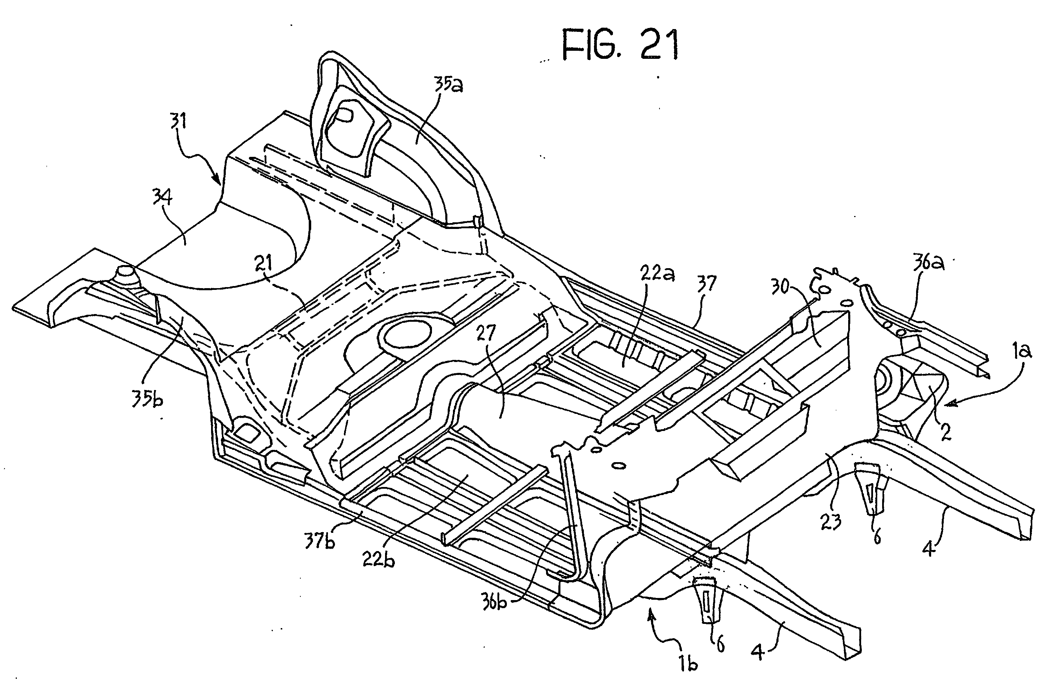

At this point, the chassis structure assumes the appearance shown in Figure 21.

Figure 21 substantially shows the basic structure of a motor vehicle, and is subsequently completed by the juxtaposition and welding of further constituent elements, in a substantially known way.

The structure produced as described above advantageously includes a large number of elements or components that are metal profile sections. By virtue of this characteristic, the costs of development and manufacture of the chassis can be reduced considerably.

The use of pressed sheet steel elements is limited to those structural parts requiring the utmost precision of execution, high structural strength, or which have shapes unsuitable for formation from profile sections.

The attachment and support elements for members and devices, such as, for example, the suspension, are advantageously concentrated in the front and rear nodal structures and are formed as pressed elements, with a consequent precision of execution and mutual positioning.

The structure of the chassis or base realised in the way described above lends itself to production by way of highly automated installations, with assembly and welding lines of the so-called "pick and place" type and/or on tacking lines of the so-called "skid" type.

Furthermore, the base or chassis structure described above enables, using only a limited number of modified structural elements, the chassis to be easily adapted for models of motor vehicle having different characteristics, for example, having different lengths, different front and rear projections, and different body widths.

The precision of execution and positioning of the attachment and support elements for mechanical members and devices is also, in this case, ensured.

Naturally, the principle of the invention remaining the same, the embodiments and the constructional details can be widely varied with respect to that described and illustrated by way of non-limitative example, without by this departing from the scope of the invention as defined in the accompanying claims.

## Claims

1. A method for the manufacture of a vehicle chassis comprising the stages of:
forming a pair of front lateral nodal structures (1a, 1b) from which respective front longitudinal beams (4) project, and interconnecting the said nodal structures (1a, 1b) by means of a first cross beam (7) to form a first rigid subframe (9);
connecting two first longitudinal elements (10a, 10b) to the said first subframe (9) by fixing first ends of the longitudinal elements (10a, 10b) to the said nodal structures (1a, 1b) in such a way that the longitudinal elements (10a, 10b) extend coplanar and parallel to each other from the opposite side from the said front longitudinal beams (4), and then interconnecting the other ends of the said longitudinal elements (10a, 10b) by means of a second cross beam (12) to form a second rigid subframe (14);
forming a pair of rear lateral nodal structures (15a, 15b) from which respective longitudinal beams (20a, 20b project,
connecting the rear nodal structures (15a, 15b) to the second subframe (14) so that the said rear longitudinal beams (20a, 20b) extend from the opposite side of the said front longitudinal beams (4), and
interconnecting the said rear nodal structures (15a, 15b) by means of a third cross beam (21)
**characterized in that** the said rear lateral nodal structures (15a, 15b) are fixed to the ends of the second cross beam (12).

2. A method according to Claim 1, **characterised in that** the said front longitudinal beams (4), the said first longitudinal elements (10a, 10b), the rear longitudinal beams (20a, 20b) and the said third cross beam (21) are formed from metal profiles, in particular, extruded metal elements.

3. A method according to Claim 1 or 2, **characterised in that** the said front nodal structures (1a, 1b), the rear nodal structures (15a, 15b), the said first cross beam (7) and the second cross beam (12) are formed from pressed sheet steel.

4. A method according to any preceding claim, **characterised in that** the front nodal structure (1a, 1b) each comprise a shaped element (2) in which a dome (3) is formed for the attachment of the front suspension, and a lower support (6) for the attachment of an arm of the said suspension.

5. A method according to any preceding claim, **characterised in that** the said rear nodal structures (15a, 15b) are formed as shaped elements, each having a lower front projection (17) for connection to the said second cross beam (12), an upper projection (18) for connection to the said third cross beam (21) and a rear projection (19) for the connection to the respective rear longitudinal beam (20a, 20b).

6. A method according to Claim 2, **characterised in that** the front (4) and rear (20a, 20b) longitudinal beams, the aforesaid first longitudinal elements (10a, 10b) and the said third cross beam (21) are constituted from channel-shape elements.

7. A method according to any preceding claim, **characterised in that** panels and footwell plates (22a, 22b), essentially rectangular in shape and disposed facing and transversely separated from each other are applied and welded to the said first longitudinal elements (10a, 10b) and the second cross beam (12).

8. A method according to Claim 7, **characterised in that** a tunnel-shape element (27) is superimposed on and welded to the panels or footwell plates (22a, 22b).

9. A method according to any preceding claim, **characterised in that** the said front nodal structures (1a, 1b) are formed to include respective rear beams (5).

10. A method according to Claim 9, **characterised in that** a lower dashboard panel (23) is juxtaposed and welded to the said rear beams (5) of the front nodal structures (1a, 1b) as well as to the front ends of the said longitudinal elements (10a, 10b).

11. A method according to Claim 10, **characterised in that** a rear floor panel (31) is positioned on and welded to the. said second cross beam (12) and the said rear nodal structures (15a, 15b).

12. A method according to Claim 11, **characterised in that** respective wheel arch elements (35a, 35) are positioned against and welded to the said rear floor panel (31) as well as to the rear nodal structures (15a, 15b).

13. A method according to any preceding claim, **characterised in that** respective front side members (37a, 37b) are positioned against and welded to the said front nodal structures (1a, 1b).

14. A method according to Claim 13, **characterised in that** respective lateral longitudinal elements (37a, 37b) are positioned against and welded to the sides of the said footwell plates (22a, 22b), the said front side plates (36a, 36b) and the rear nodal structures (15a, 15b).

15. A method according to any preceding claim for the manufacture of a chassis provided with attachment or support elements (3, 6) for connecting mechanical members or devices to the chassis; **characterised in that** the said attachment or support elements (3, 6) are formed only in the said nodal structures (1a, 1b; 15a, 15b), in particular, as pressed steel elements.

16. A chassis obtainable using the method according to one or more of the preceding claims, comprising
a pair of front lateral nodal structures (1a, 1b) from which respective front longitudinal beams (4) project and a first cross beam (7) interconnecting said nodal structures (1a, 1b) to form a first rigid subframe (9);
two first longitudinal elements (10a, 10b) connected to the said first subframe (9) by fixing first ends of the longitudinal elements (10a, 10b) to the said nodal structures (1a, 1b) in such a way that the longitudinal elements (10a, 10b) extend coplanar and parallel to each other from the opposite side from the said front longitudinal beams (4), and a second cross beam (12) interconnecting the other ends of the said longitudinal elements (10a, 10b) to form a second rigid subframe (14);
a pair of rear lateral nodal structures (15a, 15b) from which respective longitudinal beams (20a, 20b) project, which nodal structures (15a, 15b) are connected to the second subframe (14) so that the said rear longitudinal beams (20a, 20b) extend from the opposite side of the said front longitudinal beams (4), and a third cross beam (21) interconnecting the said rear nodal structures (15a, 15b), **characterised in that** the said rear lateral nodal structures (15a, 15b) are fixed to the ends of the second cross beam (12).

## Patentansprüche

1. Verfahren zur Herstellung eines Fahrzeugchassis, umfassend die folgenden Schritte:
das Bilden eines Paars vorderer seitlicher Knotenstrukturen (1a, 1b), von denen jeweils vordere Längsträger (4) ausgehen, und das Verbinden der Knotenstrukturen (1a, 1b) durch einen ersten Querträger (7) zur Bildung eines ersten starren Hilfsrahmens (9);
das Verbinden der beiden ersten Längselemente (10a, 10b) mit dem ersten Hilfsrahmen (9), indem erste Enden der Längselemente (10a, 10b) solcherart an den Knotenstrukturen (1a, 1b) befestigt werden, dass sich die Längselemente (10a, 10b) koplanar und parallel zueinander von der gegenüberliegenden Seite der vorderen Längsträger (4) erstrecken, und danach das Verbinden der anderen Enden der Längselemente (10a, 10b) durch einen zweiten Querträger (12) zur Bildung eines zweiten starren Hilfsrahmens (14);
das Bilden eines Paars hinterer seitlicher Knotenstrukturen (15a, 15b), von denen jeweils Längsträger (20a, 20b) ausgehen,
das Verbinden der hinteren Knotenstrukturen (15a, 15b) mit dem zweiten Hilfsrahmen (14), so dass sich die hinteren Längsträger (20a, 20b) von der gegenüberliegenden Seite der vorderen Längsträger (4) erstrecken, und
das Verbinden der hinteren Knotenstrukturen (15a, 15b) durch einen dritten Querträger (21),
**dadurch gekennzeichnet, dass** die hinteren seitlichen Knotenstrukturen (15a, 15b) an den Enden des zweiten Querträgers (12) befestigt sind.

2. Verfahren gemäß Anspruch 1, **dadurch gekennzeichnet, dass** die vorderen Längsträger (4), die ersten Längselemente (10a, 10b), die hinteren Längsträger (20a, 20b) und der dritte Querträger (21) aus Metallprofilen, insbesondere stranggepressten Metallelementen, gebildet sind.

3. Verfahren gemäß Anspruch 1 oder 2, **dadurch gekennzeichnet, dass** die vorderen Knotenstrukturen (1a, 1b), die hinteren Knotenstrukturen (15a, 15b), der erste Querträger (7) und der zweite Querträger (12) aus Pressblech gebildet sind.

4. Verfahren gemäß jedem vorhergehendem Anspruch, **dadurch gekennzeichnet, dass** die vordere Knotenstruktur (1a, 1b) jeweils ein Formelement (2) umfasst, in dem eine Kuppel (3) zur Anbringung der Vorderaufhängung und eine untere Stütze (6) zur Anbringung eines Arms der Aufhängung gebildet sind.

5. Verfahren gemäß jedem vorhergehendem Anspruch, **dadurch gekennzeichnet, dass** die hinteren Knotenstrukturen (15a, 15b) als Formelemente gebildet sind, wobei jedes einen unteren vorderen Fortsatz (17) zur Verbindung mit dem zweiten Querträger (12), einen oberen Fortsatz (18) zur Verbindung mit dem dritten Querträger (21) und einen hinteren Fortsatz (19) zur Verbindung mit dem jeweiligen hinteren Längsträger (20a, 20b) besitzt.

6. Verfahren gemäß Anspruch 2, **dadurch gekennzeichnet, dass** der vordere (4) und die hinteren (20a, 20b) Längsträger, die vorgenannten ersten Längselemente (10a, 10b) und der dritte Querträger (21) aus rillenförmigen Elementen gebildet sind.

7. Verfahren gemäß jedem vorhergehendem Anspruch, **dadurch gekennzeichnet, dass** Tafeln und Fußraumplatten (22a, 22b), die im Wesentlichen eine rechteckige Form aufweisen und einander gegenüberliegend und transversal voneinander getrennt angeordnet sind, an den ersten Längselementen (10a, 10b) und am zweiten Querträger (12) angebracht und angeschweißt sind.

8. Verfahren gemäß Anspruch 7, **dadurch gekennzeichnet, dass** ein tunnelförmiges Element (27) über die Tafeln oder Fußraumplatten (22a, 22b) gelagert und an diese geschweißt ist.

9. Verfahren gemäß jedem vorhergehendem Anspruch, **dadurch gekennzeichnet, dass** die vorderen Knotenstrukturen (1a, 1b) solcherart geformt sind, um jeweils hintere Träger (5) zu umfassen.

10. Verfahren gemäß Anspruch 9, **dadurch gekennzeichnet, dass** ein unteres Armaturenbrett (23) an die hinteren Träger (5) der vorderen Knotenstrukturen (1a, 1b) sowie die vorderen Enden der Längselemente (10a, 10b) grenzt und geschweißt ist.

11. Verfahren gemäß Anspruch 10, **dadurch gekennzeichnet, dass** ein hinteres Bodenblech (31) am zweiten Querträger (12) und den hinteren Knotenstrukturen (15a, 15b) positioniert und an diese geschweißt ist.

12. Verfahren gemäß Anspruch 11, **dadurch gekennzeichnet, dass** jeweils Radbogenelemente (35a, 35) an den hinteren Bodentafeln (31) sowie den hinteren Knotenstrukturen (15a, 15b) positioniert und an diese geschweißt sind.

13. Verfahren gemäß jedem vorhergehendem Anspruch, **dadurch gekennzeichnet, dass** jeweils vordere Längsglieder (37a, 37b) an den vorderen Knotenstrukturen (1a, 1b) positioniert und an diese geschweißt sind.

14. Verfahren gemäß Anspruch 13, **dadurch gekennzeichnet, dass** jeweils seitliche Längselemente (37a, 37b) an den Seiten der Fußraumplatten (22a, 22b), den vorderen Seitenplatten (36a, 36b) und den hinteren Knotenstrukturen (15a, 15b) positioniert und an diese geschweißt sind.

15. Verfahren gemäß jedem vorhergehendem Anspruch zur Herstellung eines Chassis, das mit Befestigungs- oder Stützelementen (3, 6) zur Anbringung von mechanischen Baugliedem oder Vorrichtungen am Chassis ausgestattet ist; **dadurch gekennzeichnet, dass** die Befestigungs- oder Stützelemente (3, 6) nur in den Knotenstrukturen (1a, 1b; 15a, 15b) gebildet sind, und zwar inbesondere als Pressblechelemente.

16. Chassis, das unter Anwendung des Verfahrens gemäß einem oder mehreren der vorhergehenden Ansprüche zu erhalten ist und Folgendes umfasst:
ein Paar vorderer seitlicher Knotenstrukturen (1a, 1b), von denen jeweils vordere Längsträger (4) ausgehen, und einen ersten Querträger (7), welcher die Knotenstrukturen (1a, 1b) zur Bildung eines ersten starren Hilfsrahmens (9) miteinander verbindet;
zwei erste Längselemente (10a, 10b), die mit dem ersten Hilfsrahmen (9) verbunden sind, indem erste Enden der Längselemente (10a, 10b) solcherart an den Knotenstrukturen (1a, 1b) befestigt sind, dass sich die Längselemente (10a, 10b) koplanar und parallel zueinander von der gegenüberliegenden Seite der vorderen Längsträger (4) erstrecken, und einen zweiten Querträger (12), welcher die anderen Enden der Längselemente (10a, 10b) zur Bildung eines zweiten starren Hilfsrahmens (14) miteinander verbindet;
ein Paar hinterer seitlicher Knotenstrukturen (15a, 15b), von denen jeweils Längsträger (20a, 20b) ausgehen, welche Knotenstrukturen (15a, 15b) mit dem zweiten Hilfsrahmen (14) verbunden sind, so dass sich die hinteren Längsträger (20a, 20b) von der gegenüberliegenden Seite der vorderen Längsträger (4) erstrecken, und einen dritten Querträger (21), welcher die hinteren Knotenstrukturen (15a, 15b) miteinander verbindet, **dadurch gekennzeichnet, dass** die hinteren seitlichen Knotenstrukturen (15a, 15b) an den Enden des zweiten Querträgers (12) befestigt sind.

## Revendications

1. Procédé de fabrication d'un châssis de véhicule, comprenant les étapes suivantes :
la formation d'une paire de structures nodales latérales avant (1a, 1b) à partir desquelles dépassent des poutres longitudinales avant respectives (4), et l'interconnexion des structures nodales (1a, 1b) à l'aide d'une première poutre transversale (7) pour la formation d'un premier sous-châssis rigide (9),
le raccordement de deux premiers éléments longitudinaux (10a, 10b) au premier sous-châssis (9) par fixation des premières extrémités des éléments longitudinaux (10a, 10b) aux structures nodales (1a, 1b) de manière que les éléments longitudinaux (10a, 10b) s'étendent sous forme coplanaire et parallèle l'un avec l'autre depuis le côté opposé aux poutres longitudinales avant (4), puis l'interconnexion des autres extrémités des éléments longitudinaux (10a, 10b) à l'aide d'une seconde poutre transversale (12) pour la formation d'un second sous-châssis rigide (14),
la formation d'une paire de structures nodales latérales arrière (15a, 15b) à partir desquelles dépassent des poutres longitudinales respectives (20a, 20b),
le raccordement des structures nodales arrière (15a, 15b) au second sous-châssis (14) afin que les poutres longitudinales arrière (20a, 20b) s'étendent du côté opposé des poutres longitudinales avant (4), et
l'interconnexion des structures nodales arrière (15a, 15b) à l'aide d'une troisième poutre transversale (21),
**caractérisé en ce que** les structures nodales latérales arrière (15a, 15b) sont fixées aux extrémités de la seconde poutre transversale (12).

2. Procédé selon la revendication 1, **caractérisé en ce que** les poutres longitudinales avant (4), les premiers éléments longitudinaux (10a, 10b), les poutres longitudinales arrière (20a, 20b) et la troisième poutre transversale (21) sont formés de profilés métalliques et en particulier d'éléments métalliques extrudés.

3. Procédé selon la revendication 1 ou 2, **caractérisé en ce que** les structures nodales avant (1a, 1b), les structures nodales arrière (15a, 15b), la première poutre transversale (7) et la seconde poutre transversale (12) sont formées de tôles embouties.

4. Procédé selon l'une quelconque des revendications précédentes, **caractérisé en ce que** chaque structure nodale avant (1a, 1b) comprend un élément conformé (2) dans lequel un dôme (3) est réalisé pour la fixation de la suspension avant, et un support inférieur (6) pour la fixation d'un bras de la suspension.

5. Procédé selon l'une quelconque des revendications précédentes, **caractérisé en ce que** les structures nodales arrière (15a, 15b) sont constituées par des éléments conformés ayant chacun une saillie inférieure avant (17) destinée au raccordement à la seconde poutre transversale (12), une saillie supérieure (18) destinée au raccordement à la troisième poutre transversale (21), et une saillie arrière (19) destinée au raccordement à la poutre longitudinale arrière respective (20a, 20b).

6. Procédé selon la revendication 2, **caractérisé en ce que** les poutres longitudinales avant (4) et arrière (20a, 20b), les premiers éléments longitudinaux précités (10a, 10b) et la troisième poutre transversale (21) sont constitués d'éléments en forme de canal.

7. Procédé selon l'une quelconque des revendications précédentes, **caractérisé en ce que** des panneaux et des plaques repose-pieds (22a, 22b), de forme essentiellement rectangulaire, disposés en regard et séparés transversalement mutuellement, sont appliqués et soudés aux premiers éléments longitudinaux (10a, 10b) et à la seconde poutre transversale (12).

8. Procédé selon la revendication 7, **caractérisé en ce qu'**un élément (27) en forme de tunnel est superposé aux panneaux ou plaques repose-pieds (22a, 22b) et soudé à ceux-ci.

9. Procédé selon l'une quelconque des revendications précédentes, **caractérisé en ce que** les structures nodales avant (1a, 1b) sont formées afin qu'elles comportent des poutres arrière respectives (5).

10. Procédé selon la revendication 9, **caractérisé en ce qu'**un panneau inférieur de tableau de bord (23) est juxtaposé et soudé aux poutres arrière (5) des structures nodales avant (1a, 1b) ainsi qu'aux extrémités avant des éléments longitudinaux (10a, 10b).

11. Procédé selon la revendication 10, **caractérisé en ce qu'**un panneau arrière de plancher (31) est positionné et soudé sur la seconde poutre transversale (12) et les structures nodales arrière (15a, 15b).

12. Procédé selon la revendication 11, **caractérisé en ce que** des éléments respectifs d'arceau de roue (35a, 35) sont disposés et soudés contre le panneau arrière de plancher (31) ainsi que les structures nodales arrière (15a, 15b).

13. Procédé selon l'une quelconque des revendications précédentes, **caractérisé en ce que** des organes latéraux avant respectifs (37a, 37b) sont positionnés et soudés contre les structures nodales avant (1a, 1b).

14. Procédé selon la revendication 13, **caractérisé en ce que** les éléments longitudinaux latéraux respectifs (37a, 37b) sont positionnés et soudés contre les côtés des plaques repose-pieds (22a, 22b), des plaques latérales avant (36a, 36b) et des structures nodales arrière (15a, 15b).

15. Procédé selon l'une quelconque des revendications précédentes destiné à la fabrication d'un châssis ayant des éléments de fixation ou de support (3, 6) destinés au raccordement d'organes ou dispositifs mécaniques au châssis, **caractérisé en ce que** les éléments de fixation ou de support (3, 6) sont formés uniquement dans lesdites structures nodales (1a, 1b ; 15a, 15b), en particulier sous forme d'éléments emboutis d'acier.

16. Châssis qui peut être obtenu par mise en oeuvre du procédé selon une ou plusieurs des revendications précédentes, comprenant
une paire de structures nodales latérales avant (1a, 1b) dont dépassent des poutres longitudinales avant respectives (4) et une première poutre transversale (7) interconnectant des structures nodales (1a, 1b) pour la formation d'un premier sous-châssis rigide (9),
deux premiers éléments longitudinaux (10a, 10b) raccordés au premier sous-châssis (9) pour la fixation des premières extrémités des éléments longitudinaux (10a, 10b) aux structures nodales (1a, 1b) d'une manière telle que les éléments longitudinaux (10a, 10b) sont coplanaires et parallèles mutuellement depuis le côté opposé aux poutres longitudinales avant (4), et une seconde poutre transversale (12) interconnectant les autres extrémités des éléments longitudinaux (10a, 10b) pour la formation d'un second sous-châssis rigide (14), et
une paire de structures nodales latérales arrière (15a, 15b) dont dépassent des poutres longitudinales respectives (20a, 20b), ces structures nodales (15a, 15b) étant raccordées au second sous-châssis (14) afin que les poutres longitudinales arrière (20a, 20b) s'étendent depuis le côté opposé des poutres longitudinales avant (4), et une troisième poutre transversale (21) interconnectant les structures nodales arrière (15a, 15b),
**caractérisé en ce que** les structures nodales latérales arrière (15a, 15b) sont fixées aux extrémités de la seconde poutre transversale (12).
